# EUROPEAN PATENT APPLICATION

(11) **EP 1 577 661 A1**
(43) Date of publication of application: **21.09.2005**
(21) Application number: 04251507.2
(22) Date of filing: 17.03.2004
(51) Int. Cl.: G01N 21/35, G01M 15/00

(54) **Non-dispersive infrared detector**

(71) Applicant: Delphi Technologies, Inc., Troy, MI 48007 (US)
(72) Inventor: Heise, Volker, 54293 Trier (DE)
(74) Representative: Jones, Keith William

(57) **Abstract**

Exhaust gas from a conduit (10) passes to a cell (18). An IR emitter (22) emits IR light of a wavelength absorbed by a gas component of interest through the cell (18) to a photosensor (24). The internal wall (28) of the cell (18) is IR-absorbent, thus causing the detector response not to be affected by soot deposition and dispensing with the need for a filter.

## Description

This invention relates to non-dispersive infra-red (NDIR) detectors suitable for use in monitoring exhaust gases.

It is known to monitor engine exhaust gas components such as CO, hydrocarbons and NOx by means of NDIR detectors. In the form commonly used hitherto, the NDIR detector has a narrow-band light source emitting at a wavelength at which the component of interest is strongly absorbing. The relevant beam is transmitted through a cell containing a sample of exhaust gas to a light detector.

For practical purposes in vehicle applications, both the emitter and the detector will be solid state devices. Available solid state emitters with narrow bandwidths have tended to have limited power, and it has been the practice for the sample cell to be in the form of a metal tube with a polished interior wall, so as to maximise the transmission of the beam by reflection also. However, since deposition of soot leads to an unpredictable change in reflectivity, it has been necessary to filter the exhaust gas sample entering the sample cell to prevent soot deposition. Such filtering adds complexity and additional delay time to the detector system, and if the filter is not periodically changed performance will degrade.

The present invention, which is defined in claim 1, is characterised by the internal wall of the cell being of, or coated with, a material which absorbs infrared light. In this way, the characteristics of the detector are not altered by soot deposition and the filter may be dispensed with. The overall problem of static soot deposition and its impact on the measuring chain is therefore restricted to the optical input and output windows.

Preferred features and advantages of the invention will be apparent from the claims and the following description.

An embodiment of the invention will now be described, by way of example only, with reference to the drawings, in which:
Figure 1 is a diagrammatic cross-section of a prior art NDIR sensor in conjunction with an exhaust gas conduit; and
Figure 2 is a similar view of a NDIR sensor forming one embodiment of the invention.

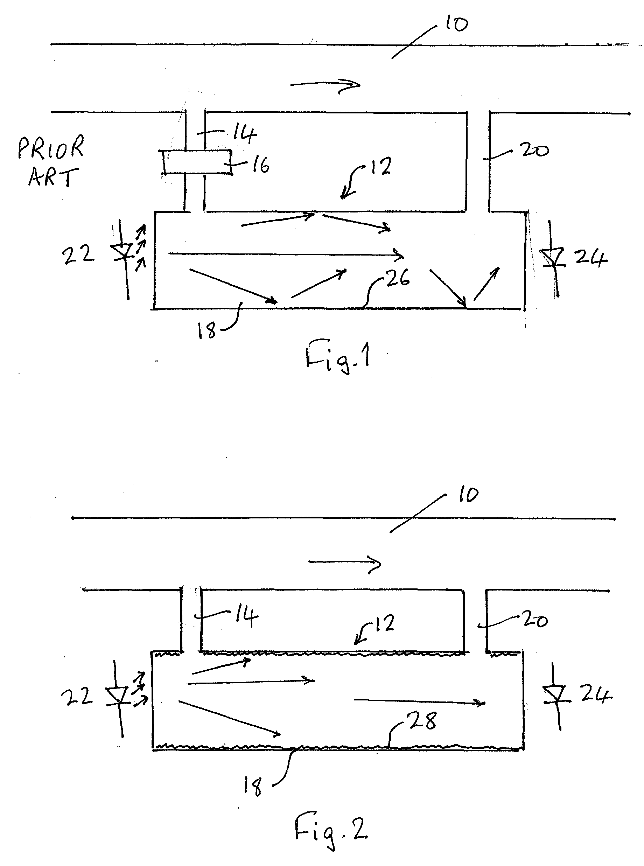

Referring to Figure 1, an exhaust gas conduit, for example a vehicle exhaust pipe, 10 has associated therewith a NDIR sensor generally designated 12. A sample of exhaust gas from the conduit 10 passes via an inlet passage 14 and filter 16 to a cell 18, and returns to the conduit 10 via an outlet passage 20. The necessary gas flow may be achieved by diffusion, or a pump may be required, especially in the presence of the filter 16.

An emitting diode (LED) 22 radiates an IR beam of chosen wavelength through the cell 18 towards a detector 24 such as a photodiode or bolometer. The LED 22 and photosensor 24 may be positioned within the cell 18 or may operate through windows.

As is well known in the art, the LED 22 is chosen to emit at a wavelength strongly absorbed by the exhaust gas component of interest, and must have a narrow bandwidth around this wavelength.

The cell 18 in the prior art typically comprises a metal tube the internal wall 26 of which is reflective, for example by being machined to a fine finish or polished.

Turning to Figure 2, in this embodiment of the present invention similar parts to those of Figure 1 are denoted by like reference numerals and will not be further described. It will be noted that the filter 16 is omitted. The internal wall 28 is absorbent of IR light which may be done by applying an absorbent coating, for example of PVC or other suitable polymer, or by making the wall from cell wall from an absorbent material such as PVC.

Since the cell walls are always absorbent, the performance of the detector is not affected by deposition of soot on the walls, and a filter is no longer required. The remaining active surfaces, such as windows, may be cleaned and treated by means of heat and/or proprietary flow characteristics, but the amount of surface to be treated is significantly reduced by the present invention.

The invention operates best if the LED 22 combines high power with a narrow bandwidth. A particularly suitable emitter is a microcavity device by CEA/Grenoble-France..

An alternative to the use of a single frequency, narrow bandwidth LED would be to use a broadband emitter plus an optical filter (either at the emitter or at the photosensor) passing only the wavelength of interest. In this way a filament lamp, for example, could be used to achieve high intensity; however, this is not so suitable for an environment such as a road vehicle.

Although described particularly with reference to road vehicle exhaust, the invention is also useful in monitoring other forms of gas flow which contain soot or other particulate contaminants.

## Claims

1. A NDIR detector (12) comprising a cell (18) for receiving a sample gas, and an infrared emitter (22) located to transmit infrared light of a wavelength absorbed by a gas component of interest through the cell (18) to an infrared detector (24);
**characterised in that** the internal wall (28) of the cell (18) is of, or coated with, a material which absorbs infrared light.

2. The NDIR detector (12) of claim 1, in which the infrared emitter (22) is a high power, narrow waveband solid state device.

3. The NDIR detector (12) of claim 2, in which the infrared emitter (22) is a microcavity device by CEA/Grenoble-France.

4. The NDIR detector (12) of any preceding claim in combination with an exhaust gas conduit (10) , and including an inlet passage (14) communicating directly between the exhaust gas conduit (10) and the cell (18) without the interposition of a filter.
